# EUROPÄISCHE PATENTSCHRIFT

(11) **EP 0 581 176 B1**
(45) Veröffentlichungstag und Bekanntmachung des Hinweises auf die Patenterteilung: **12.06.1996**
(21) Anmeldenummer: 93111637.0
(22) Anmeldetag: 21.07.1993
(51) Int. Cl.: F02M 31/125, B01D 35/18, H05B 3/14

(54) **Elektrische Heizeinrichtung für Dieselkraftstoff**
Electrical heating device for diesel fuel
Dispositif de réchauffage électrique pour carburant diesel

(30) Priorität: 30.07.1992 DE 4225149
(43) Veröffentlichungstag der Anmeldung: 02.02.1994
(73) Patentinhaber: ROBERT BOSCH GMBH, 70442 Stuttgart (DE)
(72) Erfinder: Lucas, Bernhard, Dipl.-Ing., E-28034 Madrid (ES); Projahn, Ulrich, Dr. Dipl.-Ing., E-28109 Alocobenadas Madrid (ES)

(56) Entgegenhaltungen:
- EP-A- 0 162 939
- EP-A- 0 367 631
- US-A- 4 479 477

## Beschreibung

### Stand der Technik

Die Erfindung geht aus von einer elektrischen Heizeinrichtung für Dieselkraftstoff nach der im Oberbegriff des Anspruchs 1 näher angegebenen Gattung.

Es ist schon eine solche elektrische Heizeinrichtung für Dieselkraftstoff aus der EP 0 162 939 Al bekannt, wie sie üblicherweise im Eingangsbereich eines Flüssigkeitsfilters verwendet wird. Bei dieser Heizeinrichtung, die in einem Filterkopf angeordnet ist, sind mehrere scheibenförmige PTC-Elemente zwischen zwei ebenen, wärmeleitenden Kontaktplatten angeordnet, wodurch ein guter Wärmeübergang von den Halbleiter-Heizelementen auf den durchströmenden Dieselkraftstoff erreicht wird. Von Nachteil bei dieser elektrischen Heizeinrichtung ist nun, daß die scheibenförmigen PTC-Elemente jeweils ein Mittelloch aufweisen müssen, so daß sie von gehäusefesten Haltestiften in einer radialen Ebene gehalten werden, während sie in axialer Richtung durch in die Haltestifte eingesetzten Schrauben und eine Federungsplatte fixiert sind. Diese Heizeinrichtung baut relativ aufwendig und führt zu einem hohen Montageaufwand. Außerdem geht durch das Mittelloch in den PTC-Elementen wirksame Heizfläche verloren.

Ferner ist aus der US-PS 4 479 477 eine elektrische Heizeinrichtung mit PTC-Elementen bekannt, die als scheibenförmiges Bauelement ausgeführt ist, welches zwischen einen die Anschlüsse aufweisenden Filterkopf und ein Wechselfilter einbaubar ist. Von Nachteil bei dieser Heizeinrichtung ist, daß sie einen schlechteren Wärmeübergang aufweist, da die PTC-Heizelemente nur an einer Kontaktplatte anliegen. Ferner erfolgt der Zusammenbau von Filterkopf, Heizeinrichtung und Wechselfilter über eine zentral liegende Hohlschraubenbefestigung, die relativ aufwendig und kostspielig baut und zu Abdichtproblemen führen kann. Ferner werden hier die PTC-Elemente in einem aufwendigen und teuren Klebeverfahren auf der Kontaktfläche befestigt.

### Vorteile der Erfindung

Die erfindungsgemäße elektrische Heizeinrichtung mit den kennzeichnenden Merkmalen des Hauptanspruchs hat demgegenüber den Vorteil, daß sie bei guter Heizleistung eine relativ einfache und kostengünstige Bauart aufweist, die ohne Verschraubungen bzw. Vernietungen auskommt. Ferner lassen sich als Heizkörper PTC-Elemente verwenden, die sowohl mit als auch ohne Mittelloch ausgebildet sein können. Die Heizeinrichtung baut platzsparend und eignet sich besonders für eine Modulbauweise sowie zur Integration zusätzlicher Funktionen wie zum Beispiel eines Thermoschalters. Die Außenumfassung ermöglicht eine leichtere Montage und erhöhte Flexibilität bei der Strömungsführung.

Durch die in den Unteransprüchen aufgeführten Maßnahmen sind vorteilhafte Weiterbildungen und Verbesserungen der im Hauptanspruch angegebenen Heizeinrichtung möglich. Besonders vorteilhafte Ausgestaltungen ergeben sich aus den Ansprüchen 2 bis 4, wodurch eine einfache und kostengünstige Bauweise begünstigt wird. Ferner ist eine Ausbildung nach Anspruch 5 zweckmäßig, da die PTC-Elemente auch bei starken Schüttelbewegungen der Heizeinrichtung noch in radialer Richtung geführt sind, wenn der Verband aus Heizelementen und Kontaktplatten von den Schultern in axialer Richtung abhebt. Bei einer Ausbildung der Heizeinrichtung nach Anspruch 6 lassen sich die Federungsmittel in billiger Weise realisieren und erlauben eine einfache Montage. Besonders günstig ist eine Ausbildung nach Anspruch 8, wodurch der Thermoschalter in kompakter Weise in die Heizeinrichtung integriert werden kann. Auf diese Weise ist nach außen hin für die Heizelemente und den Thermoschalter nur eine einzige elektrische Verbindung notwendig. Besonders vorteilhafte Ausbildungen der Heizeinrichtung ergeben sich aus den Ansprüchen 9, 10 und 11, wodurch die Heizeinrichtung als Modulbaustein ausgebildet werden kann, der sich besonders gut zum Einsatz in einer Modulbaureihe mit zusätzlichen Funktionen eignet. Weitere vorteilhafte Ausgestaltungen ergeben sich aus den übrigen Ansprüchen, der Beschreibung sowie der Zeichnung.

### Zeichnung

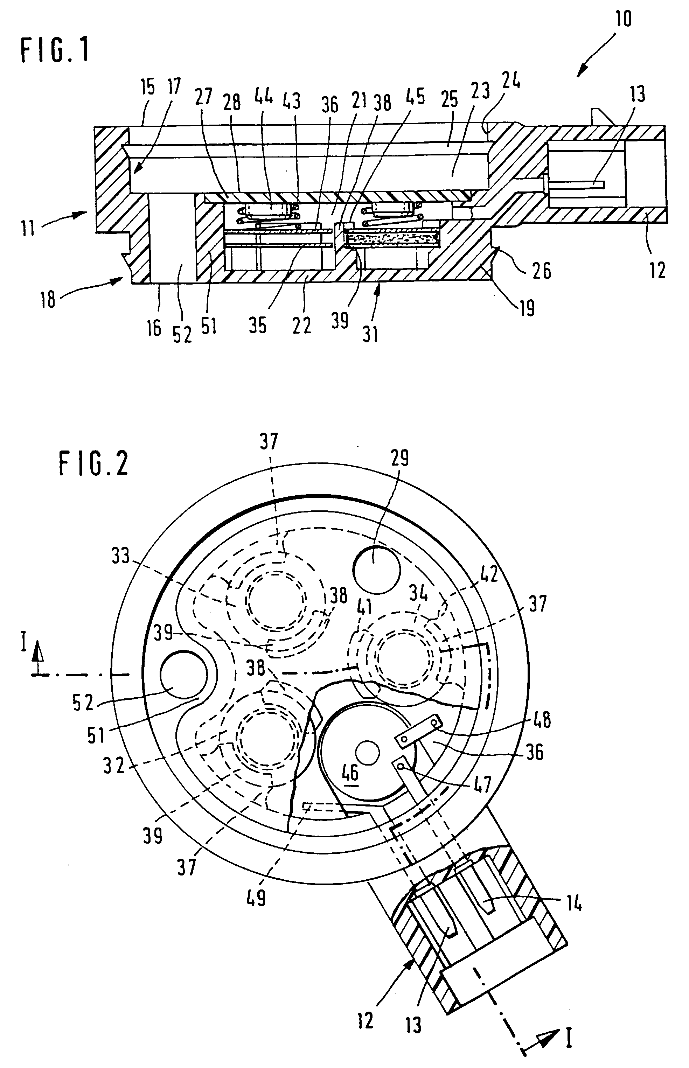

Ein Ausführungsbeispiel der Erfindung ist in der Zeichnung dargestellt und in der nachfolgenden Beschreibung näher erläutert. Es zeigen Figur 1 einen Längsschnitt durch eine elektrische Heizeinrichtung für Dieselkraftstoff in vereinfachter Darstellung und Figur 2 eine Draufsicht auf die Heizeinrichtung nach Figur 1, teilweise im Schnitt.

### Beschreibung des Ausführungsbeispiels

Das Ausführungsbeispiel nach Figur 1 zeigt einen Längsschnitt durch eine elektrische Heizeinrichtung 10 für Dieselkraftstoff, wie sie bei einem Dieselmotor in einem Kraftfahrzeug im Bereich eines Flüssigkeitsfilters in den Strömungsweg des Kraftstoffes geschaltet ist. Aus Gründen der einfacheren Darstellung verläuft der Längsschnitt nach I-I in Figur 2. Die Heizeinrichtung 10 ist in Modulbauweise ausgebildet, so daß sie sandwichartig zwischen zwei andere Modulbausteine eingebaut werden kann.

Die Heizeinrichtung 10 weist zu diesem Zweck ein Gehäuse 11 aus Kunststoff auf, das vorzugsweise aus einem glasfaserverstärkten Polyamid besteht. Das Gehäuse 11 weist im wesentlichen die Grundform einer ringförmigen Scheibe auf, an deren Außenumfang ein elektrischer Stecker 12 mit Kontaktstiften 13 und 14 ausgebildet ist, während an den beiden Stirnseiten 15, 16 das scheibenförmige Gehäuse 11 einen Buchsenanschluß 17 bzw. einen Steckeranschluß 18 aufweist, welche Teile einer Steckverbindung bilden, mit denen die Heizeinrichtung 10 sandwichartig zwischen zwei andere Bauelemente derselben Modulbaureihe einbaubar ist. Der Steckeranschluß 18 wird dabei im wesentlichen von einem zylindrischen Sockel 19 des Gehäuses 11 gebildet, der in seinem Inneren eine im wesentlichen zylindrische Ausnehmung 21 aufweist. Zwischen Ausnehmung 21 und Stirnseite 16 verbleibt somit ein relativ dünnwandiges Bodenteil 22 im Gehäuse 11.

Der Buchsenanschluß 17 im Gehäuse 11 wird im wesentlichen durch eine von der Stirnseite 15 her eingebrachte zylindrische Bohrung 23 gebildet, an deren Innenwand 24 eine Ringnut 25 ausgebildet ist. Diese Ringnut 25 bildet zusammen mit einer zugeordneten Ringlippe 26 eines anderen Modulbausteins eine Schnappverbindung beim Zusammenstecken beider Bauelemente. Eine gleichartige Ringlippe 26 ist im Steckeranschluß 18 am Außenumfang des Sockels 19 ausgebildet. Die im wesentlichen zylindrische Ausnehmung 21 ist zur zylindrischen Bohrung 23 hin offen und durch eine Deckplatte 27 abgedeckt, so daß die zylindrische Bohrung 23 mit Hilfe der Deckplatte 27 durch eine ebene Grundfläche 28 begrenzt wird. Die Deckplatte 27 besteht ebenfalls aus Kunststoff und wird vorzugsweise durch Ultraschall-Schweißen an ihrem Rand mit dem Gehäuse 11 fest verbunden. Der von der Deckplatte 27 begrenzte Raum in der Ausnehmung 21 steht über eine Öffnung 29 in der Deckplatte 27 mit dem Buchsenanschluß 17 in Verbindung, und hat über eine gleichachsig zur Öffnung 29 liegende Öffnung 31 in dem Bodenteil 22 mit dem Steckeranschluß 18 Verbindung.

Wie die Figur 1 in Verbindung mit Figur 2 näher zeigt, sind in der Ausnehmung 21 als Heizelemente Kaltleiter-Widerstände angeordnet, die hier als drei scheibenförmige PTC-Elemente 32 bis 34 ausgebildet sind. Die drei PTC-Elemente 32 bis 34 sind auf einem Durchmesser etwa gleichmäßig längs des Umfangs verteilt angeordnet und liegen zwischen zwei ebenen, metallischen Kontaktplatten 35, 36, die als elektrisch leitende Bauelemente mit guter Wärmeleitfähigkeit vorzugsweise aus Aluminium oder einer Aluminium-Legierung ausgebildet sind.

Jedes der PTC-Elemente 32 bis 34 ist in gleicher Weise in der Ausnehmung 21 gehaltert, so daß im folgenden vor allem auf die Halterung eines PTC-Elements 33 Bezug genommen wird. Das PTC-Element 33 wird durch zwei Stege 37, 38 in seiner jeweiligen Lage geführt und gehalten, wobei der auf einem äußeren Durchmesser liegende Steg 37 an der Innenwand der Ausnehmung 21 angeformt ist, während der auf einem inneren Durchmesser liegende Steg 38 vom Bodenteil 22 aus frei in die Ausnehmung 21 ragt. Die Stege 37, 38 haben jeweils die Querschnittsform eines Viertelkreises, so daß sie das PTC-Element 33 außen umfassen. Die Stege 37, 38 bilden somit für das PTC-Element 33 eine axiale Führung und sichern es zugleich gegen ein Verschieben in einer radialen Ebene. Die Stege 37, 38, welche also im Querschnitt die Form eines Kreisringabschnitts aufweisen, bilden im Abstand von dem Bodenteil 22 eine Schulter 39, auf denen die dem Bodenteil 22 nächstgelegene Kontaktplatte 35 aufliegt. Die Kontaktplatten 35, 36, die untereinander im wesentlichen die gleichen Konturen aufweisen, haben zu diesem Zweck geeignete Durchbrüche 41, welche in ihrer Form den kreisringabschnittförmigen inneren Stegen 38 und mit ihren äußeren Einbuchtungen 42 den äußeren Stegen 37 angepaßt sind. Die Kontaktplatte 35 kann somit in die Ausnehmung 21 eingesteckt werden, bis sie auf den Schultern 39 aufliegt, wobei sie in ihrer radialen Lage von den durchgreifenden Stegen 37, 38 fixiert ist. Anschließend können die PTC-Elemente 32 bis 34 jeweils zwischen einem Paar von Stegen 37, 38 eingelegt werden, wobei sie in radialer Richtung durch die Stege 37, 38 gegen Verschieben gehaltert sind. Anschließend wird die obere Kontaktplatte 36 eingesteckt, deren radiale Lage ebenfalls durch die Stege 37, 38 bzw. ihre Außenkontur gesichert ist. Zwischen der oberen Kontaktplatte 36 und der Deckplatte 27 ist im Bereich jedes PTC-Elementes 32 bis 34 eine Schraubenfeder 43 angeordnet, welche die Kontaktplatten 35, 36 und die PTC-Elemente 32 bis 34 fest gegen die Schulter 39 drücken, um neben einer guten elektrischen Leitfähigkeit auch einen guten Wärmeübergang sicherzustellen. Jede Feder 43 wird durch eine Nase 44 an der Deckplatte 27 in ihrer Lage gesichert und so gehaltert, daß die Montage der Federeinrichtung erleichtert wird. Wie die Figur 1 besonders deutlich zeigt, überragen die freien Enden 45 der Stege 38, 37 die obere Kontaktplatte 36, so daß auch bei starken Schüttelbewegungen der Heizeinrichtung 10 in einem Fahrzeug und einem eventuellen Abheben des Heizverbandes von der Schulter 39 eine sichere radiale Führung gewährleistet ist.

Wie Figur 2 näher zeigt, ist in dem Bereich zwischen den beiden PTC-Elementen 32 und 34 ein Thermoschalter 46 an sich bekannter Bauart angeordnet, der zum Beispiel als Bimetall-Schnappschalter ausgeführt werden kann. Der Thermoschalter 46 ist in der Ausnehmung 21 im Gehäuse 11 befestigt und sein erster elektrischer Kontakt 47 steht mit dem Kontaktstift 14 in elektrisch leitender Verbindung. Ein zweiter Kontakt 48 des Thermoschalters 46 ist elektrisch leitend mit der oberen Kontaktplatte 36 verbunden. Die untere Kontaktplatte 35 steht über eine elektrische Verbindung 49 mit dem Kontaktstift 13 in Verbindung, so daß beim Anschließen einer elektrischen Stromquelle am elektrischen Stecker 12 Strom über den Thermoschalter 46, die obere Kontaktplatte 36, die PTC-Elemente 32 bis 34 und die untere Kontaktplatte 35 fließen kann, wobei die Kaltleiter-Widerstände als Heizelemente wirken können.

Wie die Figur 2 näher zeigt, liegt im Bereich zwischen den PTC-Elementen 33 und 34 die Öffnung 29 in der Deckplatte 27, wodurch eine kompakte Bauweise und ein günstiger Strömungsverlauf erzielt wird. Wie Figur 2 ferner zeigt, liegt im Bereich zwischen den beiden PTC-Elementen 32 und 33 eine in die Ausnehmung 21 hineinragende Auswölbung 51 des Gehäuses 11, in der ein Kanal 52 angeordnet ist. Der Kanal 52 führt somit vom Steckeranschluß 18 zum Buchsenanschluß 17 und bildet somit eine parallele Druckmittelverbindung im Vergleich zur Verbindung zwischen den Öffnungen 29 und 31.

Die Wirkungsweise der Heizeinrichtung 10 wird wie folgt beschrieben, wobei die grundsätzliche Funktion derartiger elektrischer Heizungen als an sich bekannt vorausgesetzt wird.

Die Heizeinrichtung 10 wird mit ihrem Steckeranschluß 18 in einen nicht näher gezeichneten Filterkopfmodul eingesteckt, in dem die Anschlüsse für Zulauf und Ablauf des Druckmittels liegen. Ferner wird in die Heizeinrichtung 10 in deren Buchsenanschluß 17 ein geeigneter Deckelmodul eingesteckt, in welchem der zugeführte Kraftstoff umgeleitet wird. Der Heizeinrichtung 10 wird somit von der Stirnseite 16 her Druckmittel dem Kanal 52 zugeführt und wird über den nicht näher gezeichneten Deckelmodul vom Kanal 52 zu der Öffnung 29 in der Deckplatte 27 geleitet. Von dort strömt der Dieselkraftstoff in die Ausnehmung 21, tritt durch die Aussparungen an den beiden Kontaktplatten 36, 35 hindurch und gelangt danach in die nicht näher gezeichnete Öffnung 31 im Bodenteil 22 des Gehäuses 11, von wo der Kraftstoff aufgewärmt zum Flüssigkeitsfilter gelangt. Durch die Abstützung der Kontaktplatte 35 auf segmentförmigen Schultern 39 an den Stegen 37, 38, bleibt der größte Teil der Fläche direkt unter den PTC-Elementen 32 bis 34 frei und kann somit vom Kraftstoff umspült werden, so daß ein guter Wärmeübergang erzielt wird. Durch die äußere Umfassung der PCT-Elemente 32 bis 34 bietet sich der Vorteil, daß sowohl Elemente mit als auch ohne Zentralbohrung verwendet werden können. Der integrierte Thermoschalter 46 schaltet in an sich bekannter Weise bei ausreichend hohen Temperaturen des Dieselkraftstoffs die Beheizung der PTC-Elemente 32 bis 34 ab.

Selbstverständlich sind an der gezeigten Ausführungsform Änderungen möglich. So eignet sich die Heizeinrichtung 10 anstelle der gezeigten Ausführung mit drei PTC-Elementen auch für eine Ausbildung mit insbesondere zwei bis vier Heizelementen. Die gezeigte Heizeinrichtung stellt jedoch eine besonders einfache, kompakte und montagefreundliche Bauart ohne Schraubverbindungen dar, die sich vor allem für eine Modulbauweise eignet. Ferner ist es möglich, anstelle der beiden viertelkreisförmigen Stege eine lagesichere Umfassung zu erreichen, indem z.B. drei stiftförmige Stege, oder zwei Stifte mit einer gehäusefesten Berührung oder ein drittelkreisförmiger Steg mit einer gehäusefesten Berührung oder eine vergleichbare Anordnung die PTC-Elemente haltern.

## Patentansprüche

1. Elektrische Heizeinrichtung für Dieselkraftstoff, die bei einem Dieselmotor für Kraftfahrzeuge im Bereich eines Flüssigkeitsfilters in den Strömungsweg des Kraftstoffes geschaltet ist, mit einem Gehäuse (11), das in einer Ausnehmung (21) zwei zur Wärmeübertragung dienende, im Anlagebereich ebene Kontaktplatten (35, 36) aufweist, zwischen denen mehrere als Heizkörper dienende, scheibenförmige PTC-Elemente (32, 33, 34) mit Hilfe von Befestigungsmitteln gehäusefest gelagert und durch Federungsmittel (43) in Anlage an den Kontaktplatten gehalten sind, wobei die Kontaktplatten Durchbrüche aufweisen, durch welche die Befestigungsmittel greifen, dadurch gekennzeichnet, daß die scheibenfömigen PTC-Elemente (32, 33, 34) jeweils durch wenigstens zwei, die Elemente an ihrem Umfang führende, axial verlaufende Stege (37, 38) in radialer Richtung gehalten sind und die Kontaktplatten (35, 36) dementsprechend geformte Durchbrüche (41, 42) aufweisen und daß die Ausnehmung (21) durch eine gehäusefeste Deckplatte (27) abgedeckt ist, zwischen welcher Deckplatte (27) und der am nächsten liegenden Kontaktplatte (36) die Federungsmittel (44) angeordnet sind.

2. Heizeinrichtung nach Anspruch 1, dadurch gekennzeichnet, daß jedem PTC-Element (32, 33, 34) zwei Stege (37, 38) zur radialen Halterung zugeordnet sind, die im wesentlichen jeweils den Querschnitt eines Viertelkreises haben und die diametral zueinander liegen.

3. Heizeinrichtung nach Anspruch 2, dadurch gekennzeichnet, daß von den paarweise angeordneten Stegen (37, 38) die auf dem äußeren Durchmesser liegenden Stege (37) an der Innenwand der Ausnehmung (21) angeformt sind, während die auf dem inneren Durchmesser liegenden Stege (38) frei in die Ausnehmung (21) ragend ausgebildet sind.

4. Heizeinrichtung nach einem oder mehreren der Ansprüche 1 bis 3, dadurch gekennzeichnet, daß die Stege (37, 38) die Kontaktplatten (35, 36) in der Ausnehmung (21) lagernde Schultern (39) aufweisen, die insbesondere im Abstand von einem Bodenteil (22) des Gehäuses (11) liegen.

5. Heizeinrichtung nach Anspruch 4, dadurch gekennzeichnet, daß der Abstand zwischen den freien Enden (45) der Stege (37, 38) und den Schultern (39) größer ist als die Summe der Dicken von PTC-Element (32, 33, 34) und beiden Kontaktplatten (35, 36).

6. Heizeinrichtung nach einem der Ansprüche 1 bis 5, dadurch gekennzeichnet, daß als Federungsmittel für jedes PTC-Element (32, 33, 34) eine Schraubenfeder (43) vorgesehen ist, die insbesondere jeweils durch eine Nase (44) an der Deckplatte (27) in ihrer Lage fixiert ist.

7. Heizeinrichtung nach einem der Ansprüche 1 bis 6, dadurch gekennzeichnet, daß in der Ausnehmung (21) im wesentlichen auf gleichem Durchmesser längs des Umfangs verteilt drei PTC-Elemente (32, 33, 34) angeordnet sind.

8. Heizeinrichtung nach Anspruch 7, dadurch gekennzeichnet, daß zwischen zwei PTC-Elementen (32, 34) in der Ausnehmung (21) ein Thermoschalter (46) angeordnet ist, in dessen Bereich elektrische Kontakte (13, 14) zu einem radial ausgebildeten elektrischen Stecker (12) am Außenumfang des Gehäuses (11) führen.

9. Heizeinrichtung nach einem oder mehreren der Ansprüche 1 bis 8, dadurch gekennzeichnet, daß das die PTC-Elemente (32, 33, 34) aufnehmende Gehäuse (11) im wesentlichen die Grundform einer ringförmigen Scheibe aufweist, an deren entgegengesetzt liegenden Stirnseiten (15, 16) als zueinander passende Anschlüsse einer Steckverbindung (17, 18) ein Buchsenanschluß (17) sowie ein Steckeranschluß (18) ausgebildet sind, so daß die Heizeinrichtung (10) sandwichartig zwischen zwei andere Bauelemente derselben Modulbaureihe einbaubar ist.

10. Heizeinrichtung nach Anspruch 9, dadurch gekennzeichnet, daß der Steckeranschluß (18) an einem zylindrischen Sockel (19) des Gehäuses (11) ausgebildet ist, in den die Ausnehmung (21) ragt und daß die Ausnehmung (21) sich zu einer zylindrischen Bohrung (23) hin öffnet, die den Buchsenanschluß (17) bildet, wobei die die Ausnehmung (21) abschließende Deckplatte (27) durch die Bohrung (23) im Gehäuse (11) eingebaut ist und daß ein axialer Kanal (52) zwischen Steckeranschluß (18) und Buchsenanschluß (17) verläuft, während eine zum Kanal (52) parallele Druckmittelverbindung über eine Öffnung (29) in der Deckplatte (27), die Ausnehmung (21) und eine Öffnung (31) im Bodenteil (22) des Gehäuses (11) verläuft.

11. Heizeinrichtung nach Anspruch 10, dadurch gekennzeichnet, daß die Öffnung (29) in der Deckplatte (27) nahe dem äußeren Rand der Ausnehmung (21) und der Kanal (52) nahe dem äußeren Rand der Bohrung (23) liegen und die Öffnung (29), der Kanal (52) sowie der Thermoschalter (46) bezogen auf ihre Drehlage jeweils zwischen zwei PTC-Elementen (32 bis 34) angeordnet sind.

12. Heizeinrichtung nach einem der Ansprüche 1 bis 11, dadurch gekennzeichnet, daß die beiden Kontaktplatten (35, 36) im wesentlichen gleiche Außenkonturen (42) und gleiche Lage der Durchbrüche (41) aufweisen.

13. Heizeinrichtung nach einem der Ansprüche 1 bis 12, dadurch gekennzeichnet, daß Buchsenanschluß (17) und Steckeranschluß (18) zueinander passende Schnappelemente, insbesondere eine Ringnut (25) und eine zugehörige Ringlippe (26) aufweisen.

## Claims

1. Electrical heating device for diesel fuel, which is arranged in the path of flow of the fuel, in the region of a liquid filter, in the case of a diesel engine for motor vehicles, with a housing (11) which, in a recess (21), has two contact plates (35, 36) which serve the purpose of heat transfer, are flat in the region of contact and between which a plurality of disc-shaped PTC elements (32, 33, 34) serving as heating elements are mounted in a manner fixed relative to the housing with the aid of fastening means and held in contact with the contact plates by spring means (43), the contact plates having apertures through which the fastening means project, characterized in that the disc-shaped PTC elements (32, 33, 34) are each held in the radial direction by at least two axially extending webs (37, 38) which guide the elements at their periphery, and the contact plates (35, 36) have correspondingly shaped apertures (41, 42), and in that the recess (21) is covered by a cover plate (27) fixed relative to the housing, between which cover plate (27) and the nearest contact plate (36) the spring means (44) are arranged.

2. Heating device according to Claim 1, characterized in that each PTC element (32, 33, 34) is assigned two webs (37, 38) for radial retention, these webs each having essentially the cross-section of a quarter circle and lying diametrically opposite one another.

3. Heating device according to Claim 2, characterized in that of the webs (37, 38) - which are arranged in pairs - those webs (37) which are situated at the outside diameter are formed integrally on the inner wall of the recess (21), while the webs (38) situated at the inside diameter are formed in such a way as to project freely into the recess (21).

4. Heating device according to one or more of Claims 1 to 3, characterized in that the webs (37, 38) have shoulders (39) which support the contact plates (35, 36) in the recess (21) and, in particular, lie at a distance from a bottom part (22) of the housing (11).

5. Heating device according to Claim 4, characterized in that the distance between the free ends (45) of the webs (37, 38) and the shoulders (39) is greater than the sum of the thicknesses of the PTC element (32, 33, 34) and both contact plates (35, 36).

6. Heating device according to one of Claims 1 to 5, characterized in that a helical spring (43) which is, in particular, in each case fixed in position by a projection (44) on the cover plate (27) is provided as a spring means for each PTC element (32, 33, 34).

7. Heating device according to one of Claims 1 to 6, characterized in that three PTC elements (32, 33, 34) are arranged in the recess (21) in a manner distributed along the periphery and essentially at the same diameter.

8. Heating device according to Claim 7, characterized in that a thermal switch (46), in the region of which electrical contacts (13, 14) lead to a radially formed electrical plug (12) on the outer periphery of the housing (11), is arranged in the recess (21) between two PTC elements (32, 34).

9. Heating device according to one or more of Claims 1 to 8, characterized in that the housing (11) accommodating the PTC elements (32, 33, 34) has essentially the basic shape of an annular disc, on the opposite faces (15, 16) of which a socket connection (17) and a plug connection (18) are formed as matching connections of a plug-in connector (17, 18), allowing the heating device (10) to be installed sandwich-fashion between two other components of the same series of modular components.

10. Heating device according to Claim 9, characterized in that the plug connection (18) is formed on a cylindrical pedestal (19) of the housing (11), into which pedestal the recess (21) enters, and in that the recess (21) opens towards a cylindrical hole (23) which forms the socket connection (17), the cover plate (27) closing off the recess (21) being installed through the hole (23) in the housing (11), and in that an axial passage (52) runs between the plug connection (18) and the socket connection (17), while a pressure-medium connection parallel to the passage (52) runs via an opening (29) in the cover plate (27), the recess (21) and an opening (31) in the bottom part (22) of the housing (11).

11. Heating device according to Claim 10, characterized in that the opening (29) in the cover plate (27) lies close to the outer edge of the recess (21), and the passage (52) lies close to the outer edge of the hole (23), and the opening (29), the passage (52) and the thermal switch (46) are, as regards their angular position, each arranged between two PTC elements (32 to 34).

12. Heating device according to one of Claims 1 to 11, characterized in that the two contact plates (35, 36) have essentially identical outlines (42) and apertures (41) in essentially identical positions.

13. Heating device according to one of Claims 1 to 12, characterized in that the socket connection (17) and the plug connection (18) have matching snap-action elements, in particular an annular groove (25) and an associated annular lip (26).

## Revendications

1. Dispositif électrique de chauffage pour carburant Diesel qui dans le cas d'un moteur Diesel pour véhicules automobiles est branché au voisinage d'un filtre de liquide sur le trajet d'écoulement du carburant, avec un boîtier (11) qui dans un creux (21), comporte deux plaques de contact (35, 36) planes dans leur zone d'application et servant au transfert de la chaleur, entre lesquelles sont montés fixés dans le boîtier à l'aide de moyens de fixation et maintenus en application sur les plaques de contact par des moyens élastiques (43) plusieurs éléments PTC en forme de disques (32, 33, 34) servant de corps chauffants, tandis que les plaques de contact comportent des ajours, à travers lesquels viennent en prise les moyens de fixation, dispositif caractérisé en ce que les éléments PTC en forme de disques (32, 33 ,34) sont respectivement maintenus en direction radiale par au moins deux nervures (37, 38) s'étendant axialement et guidant les éléments sur leur périphérie, tandis que les plaques de contact (35, 36) comportent des ajours (41, 42) de forme correspondante, et en ce que le creux (21) est recouvert par une plaque de recouvrement (27) solidaire du boîtier, les moyens élastiques (43) étant disposés entre cette plaque de recouvrement (27) et la plaque de contact la plus proche (36).

2. Dispositif de chauffage selon la revendication 1 caractérisé en ce qu'à chaque élément PTC (32,33,34) sont associées pour le maintien radial deux nervures (37,38), qui ont respectivement la section transversale d'un quart de cercle et qui sont situées diamétralement l'une par rapport à l'autre.

3. Dispositif de chauffage selon la revendication 2, caractérisé en ce que des nervures (37, 38) disposées par paires, les nervures (37) placées sur le diamètre externe sont conformes à la paroi interne du creux (21), tandis que les nervures (38) placées sur le diamètre interne se dressent librement dans le creux (21).

4. Dispositif de chauffage selon une ou plusieurs des revendications 1 à 3 caractérisé en ce que les nervures (37, 38) comportent des épaulements (39) soutenant les plaques de contact (35,36) dans le creux (21) qui se situent notamment à une certaine distance d'une partie de fond (22) du boîtier (11).

5. Dispositif de chauffage selon la revendication 4, caractérisé en ce que la distance entre les extrémités libres (45) des nervures (37, 38) et les épaulements (39) est plus grande que la somme des épaisseurs de l'élément PTC (32, 33, 34) et des deux plaques de contact (35, 36).

6. Dispositif de chauffage selon une des revendications 1 à 5, caractérisé en ce que, comme moyen élastique pour chaque élément PTC (32, 33, 34) il est prévu un ressort hélicoïdal (43) qui notamment, est respectivement fixé dans sa position par un taquet (44) sur la plaque de recouvrement (27),

7. Dispositif de chauffage selon une des revendications 1 à 6, caractérisé en ce que dans le creux (21) sont disposés trois éléments PTC (32, 33, 34). essentiellement repartis sur le même diamètre le long de la périphérie.

8. Dispositif de chauffage selon la revendication 7, caractérisé en ce qu'entre deux éléments PTC (32, 34) dans le creux (21), est disposé un thermorupteur (46) dans la zone duquel des contacts électriques (13, 14) aboutissent à un connecteur électrique (12) établi radialement à la périphérie du boîtier (11).

9. Dispositif de chauffage selon une ou plusieurs des revendications 1 à 8, caractérisé en ce que le boîtier (11) recevant les éléments PTC (32, 33, 34) a essentiellement la forme de base d'un disque annulaire, sur les côtés frontaux opposés (15, 16) duquel, en tant que raccordements s'adaptant les uns aux autres d'un connecteur (17, 18), sont formés un raccordement à douilles (17) ainsi qu'un raccordement à fiches (18), de sorte que le dispositif de chauffage (10) peut être installé en sandwich entre deux autres éléments constitutifs d'une même rangée de construction modulaire.

10. Dispositif de chauffage selon la revendication 9, caractérisé en ce que le raccordement à fiches (18) est formé sur un socle cylindrique (19) du boîtier (11), dans lequel s'étend le vide (21), et en ce que ce vide (21) s'ouvre vers un alésage cylindrique (23), qui forme le raccordement à douilles (17) tandis que la plaque de recouvrement (27) fermant le creux (21) est montée dans le boîtier (11) a travers l'alésage (23) et qu'un canal axial (52) s'étend entre le raccordement à fiches (18) et le raccordement à douilles (17), tandis qu'une liaison de fluide sous pression parallèle au canal (52) s'étend par l'intermédiaire d'une ouverture (29) dans la plaque de recouvrement (27), le creux (21) et une ouverture (31) dans la partie de fond (22) du boîtier (11).

11. Dispositif de chauffage selon la revendication 10, caractérisé en ce que l'ouverture (29) dans la plaque de recouvrement (27) se situe au voisinage du bord externe du creux (21), et le canal (52) au voisinage du bord externe de l'alésage (23), et l'ouverture (29), le canal (52) ainsi que le thermorupteur (46), rapportés à leur décalage en rotation, sont respectivement disposés entre deux éléments PTC (32 à 34).

12. Dispositif de chauffage selon une des revendications 1 à 11, caractérisé en ce que les deux plaques de contact (35,36) présentent essentiellement les mêmes contours externes (42) et la même position des ajours (41).

13. Dispositif de chauffage selon une des revendications 1 à 12, caractérisé en ce que le raccordement à douilles (17) et le raccordement à fiches (18) comportent des éléments d'encliquetage s'adaptant l'un à l'autre, notamment une gorge annulaire (25) et une lèvre annulaire (26) correspondante.
